(19) Europäisches Patentamt
European Patent Office
Office européen des brevets

(11) **EP 3 633 989 B1**

(12) **EUROPEAN PATENT SPECIFICATION**

(45) Date of publication and mention
of the grant of the patent:
**25.10.2023 Bulletin 2023/43**

(21) Application number: **18809154.0**

(22) Date of filing: **06.03.2018**

(51) International Patent Classification (IPC):
*H04N 13/00* (2018.01)      *G03H 1/08* (2006.01)
*H04N 13/178* (2018.01)

(52) Cooperative Patent Classification (CPC):
**G03H 1/0808; H04N 13/388;** G03H 2001/0816;
G03H 2001/2297; G03H 2210/44; G03H 2210/441;
G03H 2210/45

(86) International application number:
**PCT/CN2018/078083**

(87) International publication number:
**WO 2018/219004 (06.12.2018 Gazette 2018/49)**

(54) **HOLOGRAM IMAGING METHOD, AND DATA GENERATION METHOD AND DEVICE**

HOLOGRAMMBILDGEBUNGSVERFAHREN UND DATENERZEUGUNGSVERFAHREN UND -VORRICHTUNG

PROCÉDÉ D'IMAGERIE HOLOGRAPHIQUE, ET PROCÉDÉ ET DISPOSITIF DE GÉNÉRATION DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2017 CN 201710398583**

(43) Date of publication of application:
**08.04.2020 Bulletin 2020/15**

(73) Proprietor: **Shanghai Intelight Electronic Technology Co., Ltd.**
**Shanghai 200438 (CN)**

(72) Inventor: **TAN, Shunyi**
**Suzhou, Jiangsu 215513 (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(56) References cited:
**EP-A1- 2 634 648          CN-A- 104 837 004**
**CN-A- 105 704 469      US-A1- 2012 249 731**
**US-A1- 2015 146 269    US-A1- 2016 187 850**

EP 3 633 989 B1

**Description**

**FIELD OF TECHNOLOGY**

The present invention mainly relates to a holographic image technology, and in particular to a dynamic imaging method and data generation method for a dynamic holographic image, and an apparatus.

**BACKGROUND**

A holographic display effect similar to a Three-Dimensional (3D) effect may be implemented by means of multiple images at different distances from an observer. Such an image can keep a distance consistent with an external actual scenery, so that a spectator feels that the image is really attached to an actual object. It has an important significance in augmented display application and the expressiveness gets much beyond a planar image. Therefore, many groups or organizations in medical industry, industrial application, vehicle and riding sports, film producers, and sports program broadcasting companies are always expected to convey a content to the spectator in a manner of a holographic image. On the other hand, the spectator is also looking forward to viewing the holographic image. Along with the advancement of technologies, the implementation of the real-time holographic image via a manner of computer-generated holography has become possible. However, the holographic image includes multiple types of information not possessed by a conventional two-dimensional (2D) image, such as an actual imaging distance of each object, a viewing angle, and a surface-hidden relationship for reflecting mutual block between the objects. At present, a technical solution that well integrates each element possessed by the holographic image, standardizes a whole processing procedure and further can improve the storage and conversion efficiency hasn't been proposed.

US 2016/187850 A1 (OH KWAN JUNG [KR]) 30 June 2016 (2016-06-30) discloses a method for processing and displaying e.g. two-dimensional image, involves encoding holographic image by quantizing holographic image to improve channel correlation of acquired holographic image, and generating encoded holographic image.

US 2015/146269 A1 (LEE BEOM RYEOL [KR] ET AL) 28 May 2015 (2015-05-28) discloses a method for generating holographic content by capturing a real object e.g. car, a virtual object and light information. The holographic content is edited using object data of the content. A result of three-dimensional (3D) rendering of the content is advance-visualized. A data format of the object data of the content corresponding to a display format of a display apparatus is converted, where the display apparatus displays the content of which the data format of the object data is converted in an optical method and feeds back a result of displaying the content.

EP 2 634 648 A1 (LG ELECTRONICS INC [KR]) 4 September 2013 (2013-09-04) discloses a method for generating computer-generated hologram using redundancy of three- dimensional videos in e.g. smartphone, involves generating hologram of current three-dimensional image frame based on modified update map.

For the above defects, it is necessary to provide an imaging method and a data generation method for a holographic image, and an apparatus that can include each element of the holographic image well and can further improve the efficiency of each link in storage, transmission and conversion.

**SUMMARY**

A technical problem to be solved by the present invention is to provide an imaging method and a data generation method for a holographic image, and an apparatus that include each characteristic element of the holographic image and can further improve the efficiency of each link in storage, transmission and conversion. In order to solve at least one part of the technical problem of the present invention, the present invention provides an imaging method for a holographic image as indicated in the appended claims.

An imaging method, a data generation method and an apparatus provided by the present invention can include each characteristic element of a holographic image and can further improve the efficiency of each link in storage, transmission and conversion.

**BRIEF DESCRIPTION OF THE DRAWINGS**

FIG. 1 illustrates a flow diagram of an imaging method for a holographic image according to an embodiment of the present invention.

FIG. 2 illustrates a structural schematic diagram of holographic image data according to an embodiment of the present invention.

FIG. 3 illustrates a flow diagram of a data generation method for a holographic image according to an embodiment of the present invention.

FIG. 4 illustrates a schematic diagram of a hardware implementation method of an imaging method for a holographic image according to an embodiment of the present invention.

## DESCRIPTION OF THE EMBODIMENTS

In order to make the above objectives, characteristics and advantages of the present invention more apparent and understandable, the specific embodiments of the present invention will be described below in detail in combination with the accompanying drawings. Many particular details are described in the following description for the ease of a full understanding of the present invention. The present invention is not limited by the following specific embodiment of the present invention.

As shown in the description and claims of the present invention, unless an exceptional case is explicitly indicated in a context, "a", "an", "one" and/or "the" are not intended to indicate a singular form, and may also include a plural form. Generally, terms "include", "including", "comprise" and "comprising" only indicate that only explicitly indicated steps and element are included, and these steps and elements are not formed into an exclusive enumeration; and a method or a device may also include other steps or elements.

First of all, an imaging method for a holographic image provided by the present invention is illustrated with an unrestricted example. The imaging method for the holographic image provided by the present invention includes two steps. The first step is to receive image data of the image. The image data further includes an image main data as a main body of a display content, and image characteristic data not included by the image main data in the main body for describing the display content (independent of the image main data). That is, some common and independent characteristics in the image data are received as the characteristic data, and the rest are received as the image main data. The second step is to process the image main data based on the image characteristic data to generate and output a holographic image.

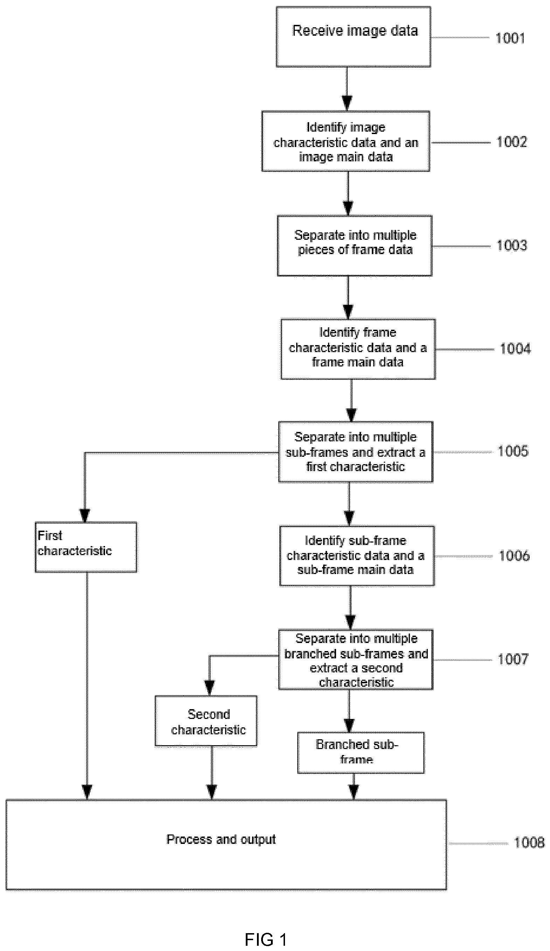

The imaging method for the image provided by the present invention will be further illustrated below with one unrestricted example in conjunction with FIGS. 1-2. In the current unrestricted example, the imaging method for the holographic image includes the following steps:

Step 1001: receive image data including an image content. This step may be implemented at a client. For example, it may be appropriate that a hand-held intelligent device of a user receives data from a network or data generated by a wearable device of the user, etc. In addition, the meaning of "receive" is generalized, for example, image data generated by a single game run in a local personal computer is received. It may also be understood that the personal computer as a display device receives the image data from itself when displaying the holographic image. The image data includes an image main data and image characteristic data. The image characteristic data may be data in which characteristics of the whole image data are included and integrated together, and may also be data in which characteristics representing a part of content in the image are separately arranged in the whole image data. The method is skipped to the step 1002.

Step 1002: identify the image characteristic data and the image main data included in the image data. The image characteristic data includes sub-frame characteristic data, file characteristic data and frame characteristic data. The file characteristic data is located at a front end of the image data and is prior to the image main data. With such an arrangement, the image data is adapted to be sent in a manner of streaming media. Or the image characteristic data may also be transmitted via a special hardware circuit, so that the characteristic data may be independent of the image main data and both the characteristic data and the image main data are sent at the same time in the manner of streaming media.

Step 1003: separate the image main data into one or more pieces of frame data. In this step, the image main data is separated via frame identification information in the file characteristic data into many small pieces of frame data that only includes a content to be displayed within a time period.

Step 1004: read each piece of frame data, and identify frame characteristic data and frame main data for each piece of frame data. This step may be similar to the method in the step 1002.

Step 1005: first separate the frame main data into one or more pieces of sub-frame data, having a same first characteristic and read each piece of sub-frame data. The method for separating the frame main data into the sub-frame may be, for example, to separate each frame main data into one or more pieces of sub-frame data according to sub-frame identification information in the frame characteristic data. For the separated sub-frame, a sub-frame main data and sub-frame characteristic data for each piece of sub-frame data are identified, where the sub-frame characteristic data includes a first characteristic, and each image components in the sub-frame main data has the same first characteristic; and the first characteristic is extracted. Herein, the first characteristic is a combination of one or more of a color, an depth, a receiving target, a scaling, a viewing angle, light intensity, surface-hidden information, and left and right frames. It is to be noted that the "color" also has a generalized understanding, may be understood as red, yellow and blue colors in a Red Green Blue (RGB) color space, and may also be understood as hue, saturation and brightness in a Hue-Saturation-Brightness (HSB) color space.

Upon the completion of the current step, the sub-frame main data is processed according to the sub-frame characteristic data, or at least one of the sub-frame characteristic data, the file characteristic data and the frame characteristic data, and the holographic image is generated and output. The method is skipped to the step 1006. Besides, the file characteristic data and the frame characteristic data may be empty. That is, when both the file characteristic data and the frame characteristic data are empty the sub-frame main data is only processed according to the sub-frame characteristic data in imaging.

Step 1006: read each piece of sub-frame data, and identify sub-frame characteristic data and a sub-frame main data for each piece of sub-frame data.

Step 1007: separate the sub-frame main data into one or more pieces of branched sub-frame data, read each piece of branched sub-frame data, and identify a branched sub-frame main data and branched sub-frame characteristic data of the branched sub-frame data, where each image components in the branched sub-frame data has a same second characteristic, and the second characteristic is another combination of one or more of the color, the depth, the receiving target, the scaling, the viewing angle, the surface-hidden information, the light intensity, and the left and right frames; and then, extract the second characteristic. For example, the resolution is 1920*1080, each frame includes six sub-frames regularly, the main data is transmitted via 24 data lines, one row synchronous data line and one column synchronous data line, three pixel points are transmitted in each clock cycle, and the first characteristic is a combination of the distance and the color, where the color is arranged in a fixed sequence of RGBRGB, and the distance information is transmitted via one data line. The six sub-frame main bodies of each frame main body are transmitted completely within 691200*6 clock cycles, and the distance information of the first characteristic corresponding to each sub-frame is transmitted completely within 16 clock cycles upon the transmission of each sub-frame main body.

Step 1008: generate the holographic image based on the file characteristic data, the frame characteristic data, the sub-frame characteristic data and the branched sub-frame characteristic data and output the holographic image. Similar to the step 1005, the file characteristic data and the frame characteristic data may be empty.

The sequence of the above steps is not limited, and it is allowable to change the sequence according to an actual demand or a manner easily understood by the person skilled in the art.

In the step 1008, there may be various methods for processing the image components included in the branched sub-frame data according to the first characteristic and the second characteristic. Among them, one optional processing method includes the following steps:

1. Input a target image $I^{pmX}_{11}(x, y)$ and an initial phase $\Phi^{pmX}_i(x, y)$, the number of iterations R, and the number of superimposed holographic sub-frames/branched sub-frames S, and initialize r=1, s=1.

2. Suppose target intensity and phase distribution.

$$T^{pmX}_{s1}(x, y) = \sqrt{I^{pmX}_{s1}(x, y)} e^{i\Phi^{pmX}_s(x,y)}$$

3. Calculate a quantized hologram

$$H^{pmX}_{sr}(\xi, \eta) = Q\{C(Trans\{T^{pmX}_{sr}(x, y)\}, A_{\xi\eta}, P_{\xi\eta}, G_{\xi\eta})\}.$$

4. Determine r<R; if yes, run the step 5; and if no, skip to the step 8.

5. Calculate an image $T'^{pmX}_{sr} = Trans^{-1}\{C^{-1}(H^{pmX}_{sr}(\xi, \eta), A_{\xi\eta}, P_{\xi\eta}, G_{\xi\eta})\}$ generated by $H^{pmX}_{sr}(\xi,\eta)$.

6. Suppose r=r+1.

7. Calculate $T^{pmX}_{sr} = I(T^{pmX}_{s1}, T^{pmX}_{s(r-1)}, T'^{pmX}_{s(r-1)}, A_{\xi\eta}, P_{\xi\eta}, G_{\xi\eta})$, and skip back the step 3.

8. Output a corresponding quantized hologram $H^{pmX}_{sr}(\xi, \eta)$ of a corresponding frame/sub-frame/branched sub-frame.

9. Suppose s=s+1, reset the r, and suppose r=1.

10. Determine s≤S; if yes, run the step 11; and if no, end the calculation of the frame/sub-frame/branched sub-frame image, and wait for or accept a next frame/sub-frame image.

11. Suppose an energy distribution of the next sub-frame as $I^{pmX}_{s1} = k(T^{pmX}_{11}, T^{pmX}_{1R}, T^{pmX}_{2R},..., T^{pmX}_{(s-1)R})$, continue to use or generate a new $\Phi^{pmX}_i(x, y)$, and skip back to the step 2.

The $I^{pmX}_{11}(x, y)$ is image data of the input frame or sub-frame or branched sub-frame, the $T^{pmX}_{s1}(x, y)$ is an intensity distribution, and the $\Phi^{pmX}_i(x, y)$ may be the phase obtained by iteration of a previous frame of image, and may also be pre-stored or obtained in other methods. The *Trans*{} and the *Trans*$^{-1}${} are transformation and inverse transformation (for example, Fourier transformation, inverse Fourier transformation, Fresnel transformation, inverse Fresnel transformation and simulated annealing algorithm and etc.) to generate the hologram correspondingly, the $A_{\xi\eta}$ is illumination light intensity and phase distribution, the $P_{\xi\eta}$ is characteristic data, the $G_{\xi\eta}$ is optical compensation data and is configured to compensate aberration (spherical aberration, comatic aberration, astigmation, field curvature, distortion, higher order aberration, lateral chromatic aberration, color chromatic aberration, etc.) generated in an optical system and/or optical aberration (myopia, hyperopia, astigmatism, etc.) generated by human eyes, and the $C()$, $C^{-1}()$ is function and inverse function relationship for the intensity and phase distribution of the hologram and image generated after the addition of the compensation data. The $Q\{\}$ is a quantitative method (for example, abandonment intensity, quantization phase distribution, or intensity and phase synthesized by the use of a double-phase method, quantitative phase distribution, etc.), the $I(T^{pmX}_{s1}, T^{pmX}_{s(r-1)}, T^{pmX}_{s(r-1)}, A_{\xi\eta}, P_{\xi\eta}, G_{\xi\eta})$ is the relevant operational method of target intensity and phase distribution $T^{pmX}_{s1}$ concerning the frame or sub-frame or branched sub-frame, target intensity $T^{pmX}_{s(r-1)}$ for previous iteration, actual previous intensity and phase distribution $T^{pmX}_{s(r-1)}$ and optical compensation data, imaging distance data and etc.. The equation $I^{pmX}_{s1} = k(T^{pmX}_{11}, T^{pmX}_{1R}, T^{pmX}_{2R},..., T^{pmX}_{(s-1)R})$ indicates that the target energy distribution corresponding to each holographic branched sub-frame is associated with the previously generated holographic sub-frame/branched sub-frame (holographic sub-frame/branched sub-frame corresponding to a sub-frame or branched sub-frame of the corresponding data), and the $k()$ is the corresponding function relationship.

The sequence of the above steps is not limited, and the sequence may be subjected to change or deletion according to an actual demand or a manner easily understood by the person skilled in the art.

In addition, the frame/sub-frame/branched sub-frame of the hologram may also not be completely in one-to-one correspondence with the frame/sub-frame/branched sub-frame of the image. Theoretically, a picture of hologram may include all information (including various imaging distances and angles, etc.) of a display image and the implementation in a manner of quickly overlapping multiple sub-frames or branched sub-frames in time turns out to be unnecessary. For example, 10 branched sub-frames in one sub-frame of the image respectively represent image components at different imaging distances, so when the hologram is calculated, only one frame of hologram sub-frame (only having one branched sub-frame or no branched sub-frame) including 10 elements at different imaging distances may be generated, that is, one frame of hologram sub-frame (without 10 branched sub-frames) may include all characteristic information in the image components in actual display. In the above example, the hologram sub-frame (only including one branched sub-frame) may be obtained via direct calculation; or 10 hologram sub-frames corresponding to images at different distances may be calculated first and are not output actually; and the 10 hologram sub-frames are processed (for example, in a manner of overlapping intensity and/or phase) into one hologram sub-frame (only including one frame of hologram sub-frame) and then output.

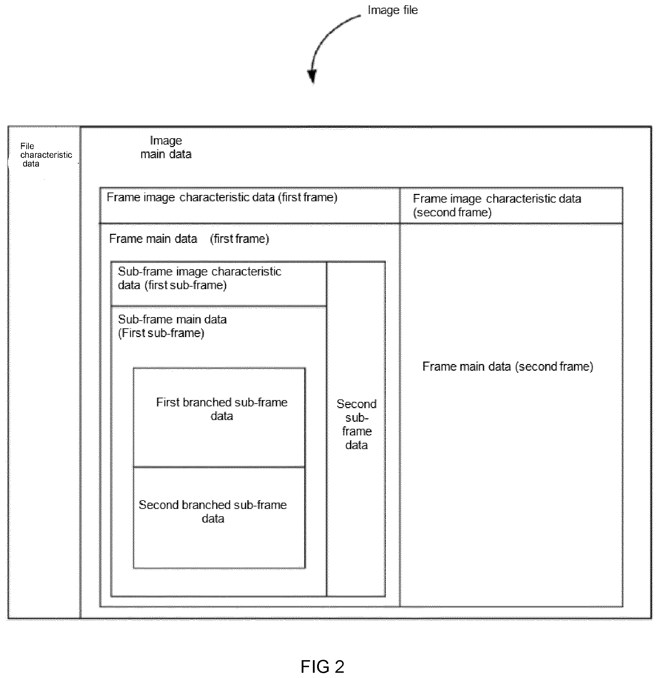

According to the method shown in FIG. 1 and the foregoing variation solution thereof, the image data structure shown in FIG. 2 or the foregoing variation solution thereof may be subjected to decapsulation and then processed to display. In addition, according to the method shown in FIG. 1 and the foregoing variation solution thereof, the image data of other structures including the image content may also reorganized in light of the image data structure shown in FIG. 2 and the foregoing variation solution to display.

With such an arrangement manner, the color, depth and angle of each frame or sub-frame or branched sub-frame are recorded, and are recorded at a relatively uniform position to form a uniform criterion, thus improving the efficiency in extraction. On the other hand, image contents having similar characteristics may be recorded together, and displayed one by one according to a time sequence in display, thus improving the transmission efficiency, and reducing the switching frequency of a display device among different depths and colors; and therefore, the requirement on hardware in display is low and the relatively good display effect is achieved.

In the above example, the difference of the frame, sub-frame and branched sub-frame for the viewer lies in: for the viewer, each frame is a picture of integral image seen at some moment (although a sub-frame image actually may be a quick switch in time, and makes the viewer consider that what he/he sees are different portions of a same picture of image but not multiple pictures of different images in time by means of **persistence** of **vision** of human eyes), and the sub-frame and the branched sub-frame are different characteristic elements in this image. Nevertheless, by virtue of superposition in a space at a same moment, and/or quick superposition at different moments (with the use of the **persistence** of **vision** of the human eyes), it is considered by the viewer that this is a frame of integral image.

It is to be noted that the above are merely the illustration for the optional example of the imaging method provided by the present invention. Many steps of the imaging method provided by the present invention may have various implementation manners, and will be further described below in some unrestricted examples.

According to one unrestricted example, the file characteristic data includes one or more of an depth representing a position of an image components in imaging, a receiving target representing which user will receive, a viewing angle representing an angle formed between the image components and a viewer in imaging, an hidden-surface for a mutual blocking relationship of the image components in imaging, left and right frames representing which frame in the image data is sent to a left eye and which frame is sent to a right eye, an image color, and total light intensity of light when the image components images, and a scaling relationship representing a scaling relationship between the generated or recorded image components and the actual displayed image components.

Additionally, the image main data may be a bitmap, a vector diagram or a hologram to be displayed; and the bitmap, the vector diagram or the hologram may be encrypted or unencrypted, and may also be compressed or uncompressed.

According to one unrestricted example, the first characteristic is the color. In the step 1005, each frame main data is separated into multiple sub-frames, and the color of each image components in each sub-frame is one type in a spectrum. For example, when the RGB color space is used, each frame main data is separated into three sub-frames, where the color of the image components in the first sub-frame is red, the color of the image components in the second sub-frame is green, and the color of the image components in the third sub-frame is blue. In the current unrestricted example, the second characteristic is the depth, that is, the distance between the image and the user in display. For example, in the step 1007, each frame main data is separated into three branched sub-frames; and the depths of image components in the three branched sub-frames are any distance in the space respectively, for example, the distances of three branched sub-frames of a first sub-frame in a first frame respectively are 0.5 m, 3 m and 20 m, the distances of three branched sub-frames of a second sub-frame of the first frame respectively are 0.8 m, 19 m and 5 m, the distances of three branched sub-frames of a third sub-frame of the first frame respectively are 0.5 m, 19 m and 30 m, the distances of three branched sub-frames of a first sub-frame of a second frame respectively are 0.1 m, 15 m and 8 m, the distances of three branched sub-frames of a second sub-frame of the second frame respectively are 0.1 m, 15 m and 8 m, and the distances of three branched sub-frames of a third sub-frame of the second frame respectively are 0.2 m, 8 m and 10 m, and so on. In this way, each piece of frame data is separated into 9 sub-frames. Three colors in the RGB may form various colors, and the different depths may be respectively configured to display a near scenery, a medium-distance scenery and a distant scenery. Good display effect may be achieved by changing the distance freely.

According to another unrestricted example, the first characteristic is the depth. For example, each frame file main data in the step 1005 is separated into multiple sub-frames, where the depth of an image components in a first sub-frame is any distance in 0-1 m, the depth of the image components in a second sub-frame is any distance in 1-5 m, and the depth of the image components in a third sub-frame is any distance in 5-20 m to infinity. On the contrary, the second characteristic is the color. In the step 1007, each sub-frame main data is separated into three branched sub-frames, the color of the image components in each branched sub-frame uses 450 nm blue, 520 nm green and 638 nm red, and thus the color of each branched sub-frame is one of the three colors.

The color information is listed as characteristic information but not displayed ordinarily and arranged sequentially in a general fixed format such as RGB, which lies in that the holographic display often has some simple image display requirements on colors. For example, a set of device having an RGB full-color display function only has a white pattern for a long time in a video; in such a case, the original three sub-frame or branched sub-frame main data main of the RGB may be combined into one sub-frame or branched sub-frame main data, and only that an R color, a G color and a B color is labeled in the characteristic information describing the color of the main data; and in this way, the requirement on storage and transmission may be reduced. Furthermore, in some cases, it may also be appropriate to only calculate a hologram of one color (such as the G color); the hologram is directly or simply processed to output as the hologram for other colors (such as the R color and the B color); and under the irradiation of different light sources, a white image is synthesized; and therefore, the computation burden may further be reduced greatly.

Besides, as the holographic display uses interference and diffraction principles of the light for imaging, and the spatial light modulator has different diffraction angles for different optical wavelengths in fact, so in order to simplify the subsequent computation when the hologram is generated, or reduce the cost and design difficulty of optical hardware, the resolution of each color image may also be set to be different, and the resolution corresponding to each color sub-frame is written to the file characteristic data.

On the other hand, in the step 1003, the specific method for separating the whole image data into multiple pieces of frame data according to the frame identification information in the file characteristic data may be diverse, and will be further described below with some unrestricted examples.

According to one unrestricted example, the frame identification information in the file characteristic data includes frame length information representing a length of each piece of frame data. For example, the frame length information may be that "the length of each piece of frame data is 1 MB". In the step 1003, the image main data in the image data may be separated at a length of 1 MB according to the frame length information to obtain the frame data. The same method may also be available to separate the frame data into the sub-frame data and separate the sub-frame data into the branched sub-frame data. The advantage lies in that each piece of frame, sub-frame and branched sub-frame data has a determined length and is processed easily. According to another unrestricted example, the frame identification information in the file characteristic data includes a special frame end field. For example, the frame identification information includes an "OXFF" frame end field. Meanwhile, an end of each piece of frame data has the frame end field in the image data. In the step 1003, the image data may be separated into multiple frames according to the frame end field. The method may also be applicable to the steps of separating the frame data into the sub-frame data and separating the sub-frame data into the branched sub-frame data.

In addition, the number of sub-frames and/or branched sub-frames and/or characteristic information in each piece of frame data may be changeable, for example, the first frame includes three sub-frames, the first sub-frame includes one branched sub-frame, the second sub-frame includes five branched sub-frames and the third sub-frame includes 20 branched sub-frames, the second frame includes five sub-frames, and the first sub-frame includes three branched sub-frames, etc. The relevant number of frames and the characteristic information may be written to the frame, sub-frame and branched sub-frame identification information.

The variation of the imaging method provided by the present invention in other aspects further includes: according to one unrestricted example, the step 1004 further includes: identify left-right frame information in the file image characteristic information. The left-right frame information represents that each piece of frame data in the image main data belongs to left frame data or right frame data. For example, the left-right frame information may be that "the odd number of frame data is the left frame data and the even number of frame data is the right frame data". The identification of the left-right frame information can express the data to which each piece of frame data belongs. In the current example, the step 1007 correspondingly includes: project a branched sub-frame of a frame belonging to a left frame to a left eye of a user, and project the branched sub-frame of the frame belonging to a right frame to a right eye of the user. The left and right frame data often are data main bodies having a subtle difference, and correspond to subtle angular differences when the viewer views the scenery displayed in the frame. As the difference between the left and right frame data is very tiny usually, the left and right frames may also be recorded in a manner of a subordinated frame, for example, the left frame is a main frame, the right frame is a subordinated frame and what recorded is difference data with a left frame of image. Additionally, the left and right frames may further be separated into multiple left and right frame pairs, and different left and right frame pairs are respectively projected to multiple users located at different viewing angles. For example, the left and right frames are separated into three left and right frame pairs, the left and right frame pairs 1 are projected to the viewer located at -20°, the left and right frame pairs 2 are projected to the viewer located at 0°, and the left and right frame pairs 3 are projected to the viewer located at 10°.

According to one unrestricted example of the present invention, the data may further include multiple left and right frames at different angles, for example, three users are respectively located at viewing positions of -35°, 1° and 50°, the left-right frame information is further divided into left and right frames 1, left and right frames 2, and left and right frames 3, and after corresponding holograms are generated upon the completion of the processing of the processing module, the left and right frames 1, 2, 3 are respectively projected to the users located at different positions. The projection may be respectively sent via a server to terminal devices 1, 2, 3 worn by the three users after a relevant hologram is generated, so that the clients can see different angles of the image; and furthermore, when the users move, the angle at which each user views the image also changes in real time via the received change in angle and distance parameter. With such a protection, all frames (frames 1, 2, 3) are displayed on a set of special holographic display device, and the image at the three angles are respectively guided to eyes of the three users. The server can be connected to the client via a wireless or wired manner. Optionally, the wireless connection is one or more of Bluetooth, Wi-Fi, 3G, 4G and 5G.

According to one unrestricted example of the present invention, the frame characteristic data further includes compensation information to compensate the displayed image. Correspondingly, the step 1003 further includes: identify compensation information in the file characteristic data. The compensation information includes one or more of a spherical aberration coefficient, a comatic aberration coefficient, an astigmatic coefficient, a distortion coefficient, a field curvature coefficient, a lateral chromatic aberration, a position aberration, a higher order aberration, a diopter coefficient and an astigmatic coefficient. The compensation information may be, for example, generated according to the imaging device and user information associated with a condition of the user. Furthermore, the compensation information may also be generated jointly according to multiple pieces of information.

According to one unrestricted example, the method for processing the image main data, the frame main data and the sub-frame main data may be carried out by the use of operation associated with phase distribution. The specific method is to first convert the file characteristic data, the frame characteristic data or the sub-frame characteristic data into a corresponding phase distribution matrix, and use the phase distribution matrix when the image main data, the frame main data and the sub-frame main data are processed.

It is to be noted that the phase data may be the characteristic data such as the depth and angle, may also be the compensation information such as one or more of a user short sightedness condition (diopter, astigmatism, etc.),

aberration of an optical system and screen size, or may further be a combination of the characteristic data and the compensation information. The phase data may also be generated according to the above data. The characteristic data is associated with the display content and thus changes from time to time. The compensation information is mainly associated with a relatively fixed factor such as a play scenario, a play device and a viewer, and thus keeps unchanged basically in the whole imaging process. The characteristic data and the compensation information may be compensated after the hologram, kinoform or vector diagram is generated by using the main data and the final hologram, kinoform or vector diagram obtained by the calculation with the characteristic data and the compensation information is output to display, and the relevant characteristic data and the compensation information may also be generated into a phase matrix and calculated together with the main data, and the final hologram, kinoform or vector diagram is generated directly. The method for converting the characteristic data and/or the compensation information into the phase distribution matrix may use a Zernike polynomial or a Seidel polynomial.

The method for processing the image main data, the frame main data and the sub-frame image data by using the phase distribution of the characteristic data and/or the compensation information is to load the phase distribution to the image main data, the frame main data and the sub-frame main data, and output the integrated image data, frame data, sub-frame data or branched sub-frame data. The loading method is to convert the phase distribution matrix obtained in the foregoing step into a size identical to a matrix of the image main data, and then perform four fundamental operations of corresponding points on the image data or a matrix of a corresponding hologram thereof and the phase distribution matrix. For example, the corresponding points are subjected to the same addition, subtraction, multiplication and division. The combined matrix is transmitted to the spatial light modulator, so that the expected image may be displayed. Specifically, the addition, subtraction, multiplication and division on the corresponding points are determined by a specific condition.

According to one unrestricted example, what recorded as the characteristic information and/or the compensation information in the corresponding characteristic data of the frame/sub-frame/branched sub-frame is the corresponding phase distribution information. For example, the phase distribution corresponding to the distance information is recorded in first characteristic information of the sub-frame as the characteristic information, so when the hologram is generated to display, the phase distribution is used to directly operate with the hologram and the generation of corresponding phase information turns out to be unnecessary; and therefore, the computation burden is reduced, and the system power consumption is lowered.

Similarly, an example of compensation will be used to describe how to process the characteristic data into the main data to generate the hologram.

The $H^{pmR}_{\xi\eta}$ is an uncompensated frame/sub-frame/branched sub-frame of the hologram, and the hologram which is compensated and added with the characteristic information is $H'^{pmR}_{\xi\eta} = C(H^{pmR}_{\xi\eta}, A_{\xi\eta}, P_{\xi\eta}, G_{\xi\eta})$, where the $A_{\xi\eta}$ is illumination light intensity and phase distribution, the $G_{\xi\eta} = g(\xi, \eta, x', y', \theta)$ is the compensation information, the $\xi, \eta$ is a corresponding frequency domain coordinate on the spatial light modulator and the x', y' is the size of a stop in an optical system. The $C()$ is a mapping or inverse mapping relationship for intensity and phase distribution of the hologram after the compensated data is generated, and is determined by the adopted specific algorithm and processing capacity of hardware. Alternatively, $G_{\xi\eta} = g(\xi, \eta, x', y', \theta, D, a, e_1, e_2, e_3, ...)$, where the D is a degree for short sightedness or far sightedness of the viewer, the a is an astigmatic degree, the $e_1, e_2, e_3, ...$ are other optical aberration coefficients such as a defocusing coefficient, a spherical aberration coefficient, a comatic aberration coefficient, an astigmatic coefficient, a distortion coefficient, a field curvature coefficient, a lateral chromatic aberration, a position aberration, a higher order aberration, a diopter coefficient and an astigmatic coefficient, and the $g()$ is a functional relationship. The $P_{\xi\eta} = f(\xi, \eta, d, \theta)$ is intensity and/or phase distribution corresponding to the characteristic information, the d is an imaging distance, the $\theta$ is a viewing angle, the $f()$ is a corresponding mapping relationship, and the $g(), f()$ may be different mapping relationships according to different algorithms or optical systems.

According to one unrestricted example, all or a part of compensation information and/or all or a part of characteristic information and phase distribution thereof may further be directly output to the spatial light modulator, and the corresponding main data and the other part of compensation information and/or characteristic information may be output to another display device (such as an OLED, an LCoS and a DMD screen). The advantage lies in that the main data displayed on the other display device may not be subjected to the calculation of the hologram and thus the operation is simplified; and in some cases, the better display effect may be achieved.

According to one unrestricted example, the frame/sub-frame/branched sub-frame characteristic data further includes angle information, so that the image components may be optimized for the viewer at different angles. For example, the step 1004 further includes: identify information representing a mapping angle of the frame in the frame characteristic data. The mapping angle may be a combination of one or more of any angles. In the step 1007, the sub-frame/branched sub-frame data belonging to the same frame data is rotated first according to the angle information of the frame data, and the rotated branched sub-frame data is used for displaying. Similar to the compensation, the rotating step may also be implemented in various manners.

According to one unrestricted example, the frame/sub-frame/branched sub-frame characteristic data further includes surface-hidden information, so that the image components can correctly embody a fore-and-aft relationship in the space. For example, a frame of image includes two sub-frames, the main body data of a sub-frame 1 includes a square and is located at a 2 m place of the viewer, and the main data of a sub-frame 2 is a non-transparent triangle and is located at a 1 m place of the viewer; and in actual display, the bottom right corner of the square located on a rear side is shielded by the triangle located on a front side and cannot be seen, and the pixel coordinate of a shielded portion of the square is recorded according to an angle in the hidden relationship in the sub-frame 1; and when the hologram is generated actually, the image for this portion of the sub-frame 1 is removed, and is no longer displayed in final output. Correspondingly, the step 1004 further includes: identify hidden information corresponding to the frame data in the characteristic data. In the step 1007, the main data belonging to the same frame/sub-frame/branched sub-frame data are processed according to the hidden information of the frame/sub-frame/branched sub-frame, the shielded portion is removed, and the frame/sub-frame/branched sub-frame data after removing the shielded portion is used for processing to display.

In addition, according to one unrestricted example, the file characteristic data further includes other relevant information. The relevant information may include: one or more of the image data length information, the compensation information, temperature information, brightness information, bit depth information, resolution information, play speed information, single frame data format information, frame characteristic data length information, whether to compress and a compression manner, creation time information and encryption manner information. In output, the output data may be adjusted according to the information. The temperature information may record a service temperature of the device in work, so that a temperature control system (if any) in the system controls a working temperature of the device within an appropriate range.

According to one unrestricted example, the sub-frame characteristic data further includes light intensity information, and the content in the sub-frame main data is distribution of image light intensity. When the sub-frame is displayed, the light intensity information read from the sub-frame characteristic data is sent to a light source or a light source drive, and the hologram generated by the sub-frame main data is sent to the spatial light modulator. Such an arrangement lies in: for the modulated light intensity and phase distribution of the hologram, the light energy is guided to a required place via interference and diffraction principles in imaging, and the undesired light is not shielded like a common display technology does for imaging; all light intensities are gathered to a displayed image content by the spatial light modulator (that is, for the hologram, there is no difference between the image all having the gray scale of 1 and the image all having the gray scale of 255), and it is necessary to adjust total output of the light source to adjust total brightness; and in this sense, the light intensity information is required to be written to the sub-frame characteristic data.

According to one unrestricted example, the main data of the frame/sub-frame/branched sub-frame is the vector diagram, for example, the main data of one branched sub-frame records vertex coordinates of 100 triangles and filled texture information thereof. In actual processing, the vector diagram is calculated first to generate a corresponding bit map and then the hologram is generated. The advantage lies in that the vector diagram is not distorted for any zooming and angle rotating; and when the vector diagram is corresponding to different characteristic information, the better display quality can be achieved. Alternatively, it may also be appropriate to first generate holograms corresponding to 100 triangles and then operate all relevant holograms (for example, accumulated holograms in the frequency domain) to obtain a final output image.

According to one unrestricted example, the main data of the frame/sub-frame/branched sub-frame is the hologram, for example, the main data of one branched sub-frame records the hologram of a flower vase. In actual processing, only the characteristic information and/or compensation information are operated with the existing hologram, for example, the imaging distance of the flower vase is adjusted to 1 m according to the characteristic information, the angle is adjusted to 10° with the center and the size is scaled to be 95% of the original size. The recalculation for generating the hologram of a target image turns out to be unnecessary, only the calculation of the characteristic information or compensation information is carried out, the computation burden may be greatly reduced, the efficiency is improved, and the power consumption is reduced.

According to one unrestricted example, at least one part of frame data included in the image data is the subordinated frame. The subordinated frame only records difference information with the previous frame. The difference information may be the frame/sub-frame/branched sub-frame main data, and/or the characteristic information. In display, the combination of the branched sub-frame data of the previous frame and the difference information and the branched sub-frame data as a current frame are displayed. If multiple continuous frames are the subordinated frames, the branched sub-frame finally displayed by the previous frame is taken as the previous frame to combine with the difference information included in the current frame, and then the combined branched sub-frame is displayed. Therefore, the size of the image data is small, and the transmission bandwidth is saved. Additionally, for some images with a small difference, the hologram corresponding to the previous frame/sub-frame/branched sub-frame may be directly processed to obtain the hologram to be displayed by this frame, and thus the computation burden is reduced.

According to one unrestricted example, a part or all of the foregoing steps 1002-1008 may be operated at the server to further reduce the load of local hardware. Specifically, after the image data to be displayed is generated at the client, the image data may be sent to the server first. Furthermore, the client further sends a play scenario parameter such as display size, a display distance, a viewing angle, environmental light intensity information and other information to the server. The server may execute the tasks of the steps 1002-1008 according to the information. Upon the completion of the tasks, the server processes the frame/sub-frame/branched sub-frame data according to the play scenario parameter and sends the processed sub-frame/branched sub-frame of the hologram directly used for displaying to the client. Optionally, when the hologram corresponding to a last piece of frame data is displayed completely, the determination on whether subsequent input is present is made; and in case of no subsequent input, the hologram corresponding to the last piece of frame data is displayed continuously.

Certainly, the client may also send the file characteristic data and/or frame characteristic data to the server (the characteristic data may be obtained via a sensor of the client, such as a camera, a Global Positioning System (GPS), a light intensity sensor, a gyroscope and an accelerometer), so that the server processes the image main data and/or frame main data according to the file characteristic data and/or frame characteristic data. Alternatively, in other unrestricted examples, the client may send instruction information requiring the server to generate the image data to the server; and after the image data is processed by the server, it is sent back to the client to display. Additionally, the server may receive relevant data or instruction from multiple clients, and may also send the relevant data or instruction to more than one client.

Optionally, the client further sends the play scenario parameter to the server when sending an image file to the server. The play scenario parameter includes one or more of display size, a distance between an image of a display and a user, resolution, a viewing angle, a scaling, environmental light intensity, image surface-hidden information and color information. The server optimizes the sub-frame data or branched sub-frame data according to the play scenario parameter, and sends the optimized hologram generated by the sub-frame or branched sub-frame data to the client.

The specific method for displaying the frame/sub-frame/branched sub-frame data may be diverse, for example, one optional method is to cache a certain number of sub-frame/branched sub-frame data first and then output the data to the spatial light modulator in a color cyclic arrangement manner. For example, a sequence of a red branched sub-frame, a green branched sub-frame, a blue branched sub-frame and a next red branched sub-frame is used to display in an RGB color space so as to achieve the better color combination effect. It may also be appropriate that the branched sub-frames of three colors in the RGB are respectively and simultaneously output to three spatial light modulators, and the required colors are output and displayed simultaneously via a color combination light path.

In order to solve at least one part of the technical problem of the present invention, the present invention further provides an imaging apparatus for a holographic image. The apparatus includes a memory and a processor. The memory may be a hard disk, a flash memory, an internal memory, etc.; and the processor may be a universal processor (such as a Central Processing Unit (CPU) and a Graphic Processing Unit (GPU)), and may also be an Application Specific Integrated Circuit (ASIC) or a Field Programmable Gate Array (FPGA), etc. The memory stores a computer code; and the processor executes, when running the computer code stored on the memory, the imaging method for the holographic image mentioned above. It may also be appropriate to develop the imaging method for the holographic image into hardware via the ASIC; and therefore, the memory does not need to store the computer code in some cases.

Furthermore, in order to solve at least one part of the technical problem of the present invention, the present invention further provides a computer readable medium storing a computer code thereon. The readable medium may be an optical disc, a hard disk, a flash memory, etc. The computer code stored on the computer readable medium is configured to execute, when a processor runs the code, the above-mentioned imaging method for the holographic image.

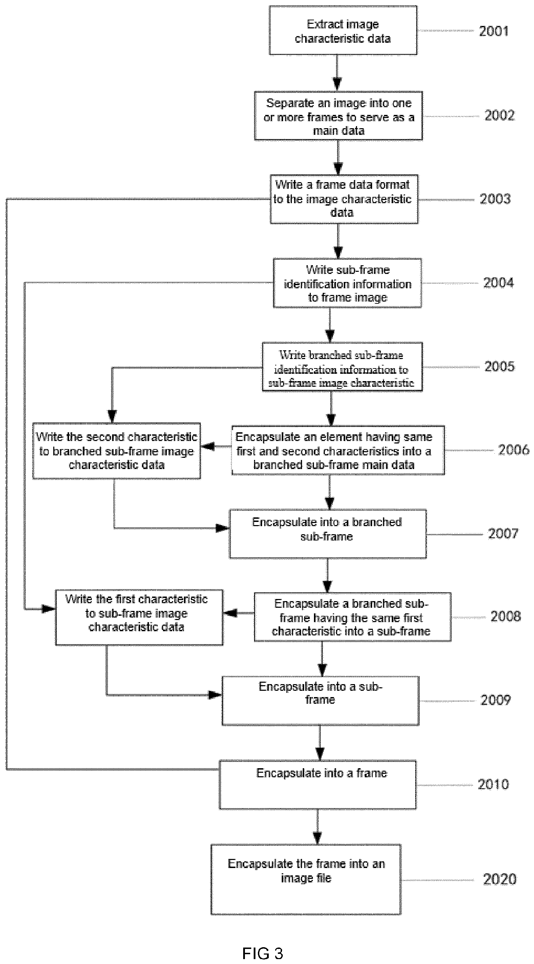

In order to solve at least one part of the technical problem of the present invention, the present invention further provides a dynamic data generation method for a holographic image, which will be described below with reference to FIG. 3. The data generation method for the holographic image provided by the present invention includes the following steps: Step 2001: extract a characteristic of an image components to be displayed, and take the extracted characteristic as a file characteristic data, the characteristic including one or more of an depth, a receiving target, a viewing angle, a scaling, left and right frames, hidden information, a color, and light intensity.

Step 2002: separate the characteristic extracted image components into one or more frames according to a time sequence, and take the one or more frames as an image main data.

Step 2003: write frame identification information corresponding to a frame data format of to-be-generated frame data to file characteristic data. The method and objective for separating all elements to be displayed according to time are approximately identical to the method and objective for separating a common planar video into frames. The objective of writing the frame identification information corresponding to the frame data format of the to-be-generated frame data to the file characteristic data is to correspond each frame made in a subsequent step to the identification information in this step. The file characteristic data is completed in advance, so that the whole image data is transmitted in a manner of streaming media. In addition, the information (for example, the data format) in the frame identification information may also be agreed in advance during the design of hardware and/or software and does not need to be written to the frame identification information specially. In this sense, the step 2003 may be omitted. For example, the resolution of the image is 1024*1024, the main data is transmitted via eight data lines, one row synchronous data line and one column synchronous data line, one pixel is transmitted in each clock cycle, the characteristic is a combination of a distance and an angle, and the distance and the angle are respectively transmitted via one independent data line. Each frame main data is transmitted completely within 1024*1024 clock cycles, and the distance and angle information of the characteristic corresponding to each frame is transmitted completely within 24 clock cycles upon the transmission of each frame main data. As the frame data are all transmitted in a format agreed during the design of hardware and software in the example, there is no need to write the frame identification information specially, and thus the step 2003 may be omitted.

It is to be noted that the step 2020 of arranging one or more pieces of frame data into the image main data according to the time sequence, and encapsulating the image main data and the file characteristic data into the image data may be directly executed after this step in some examples. However, in the current example, the method is skipped to the step 2004 upon the completion of this step.

Step 2004: write sub-frame identification information corresponding to a sub-frame data format of to-be-generated sub-frame data to frame characteristic data. In addition, the sub-frame identification information may also be agreed in advance, so that the step 2004 is omitted like the step 2003.

Step 2005: write branched sub-frame identification information corresponding to a branched sub-frame data format of to-be-generated branched sub-frame data to sub-frame characteristic data. In addition, the branched sub-frame identification information may also be agreed in advance, so that the step 2005 is omitted like the steps 2003 and 2004.

Step 2006: take the image components having same first characteristic and second characteristic in each frame as a branched sub-frame main data of same branched sub-frame data, and write the second characteristic to the branched sub-frame characteristic data, the second characteristic being a combination of one or more of the color, the depth, the receiving target, the scaling, the viewing angle, the light intensity, the hidden information and the left and right frames, and the first characteristic being another combination of one or more of the color, the depth, the receiving target, the scaling, the viewing angle, the light intensity, the hidden information and the left and right frames. The meanings of the color, the depth, the viewing angle and the like are no longer repeated herein. The significance of this step lies in that the required image and corresponding characteristic parameters thereof can be encapsulated according to a uniform data format, and thus the image components having the same characteristic can be processed and displayed once for all or in sequence.

Step 2007: encapsulate the branched sub-frame main data and corresponding branched sub-frame characteristic data into one piece of branched sub-frame data.

Step 2008: take the branched sub-frame having the same first characteristic in each frame as a sub-frame main data, and write the first characteristic to the sub-frame characteristic data, the first characteristic being one or more of the color, the depth, the receiving target, the scaling, the viewing angle, the left and right frames, a hidden relationship and the light intensity and different from the second characteristic.

Step 2009: encapsulate the sub-frame main data and corresponding sub-frame characteristic data into one piece of sub-frame data.

Step 2010: take sub-frame data in each frame as a frame main data, and encapsulate the frame main data and the frame characteristic data into the frame data.

Certainly, the level of the branched sub-frame may also be omitted, and the element having the same first characteristic is directly encapsulated into the sub-frame main data. According to the above content, the method is not conceived difficultly and thus will not be repeated thereto.

Further, the image generation method may also be predefined on a hardware device, such as a length of each frame, and a specific parameter represented by the first characteristic of the sub-frame. In this way, there is no need to generate the header data. A data stream of a to-be-displayed content and a data stream of corresponding characteristic information are generated directly according to an agreed format on the device in actual application, and transmitted to a processing module to be processed to output and display.

The specific implementation device for the above steps may also be diverse, for example, the file characteristic data may be modulated on the spatial light modulator together with the image main data, and the image main data may also be modulated on other chips (such as OLED, LCoS or DMD). Furthermore, the sequence of the above steps is not fixed, and it is allowable to change the sequence or delete a relevant step according to a manner easily known by the person skilled in the art.

According to the method shown in FIG. 3, the image data including a dynamic image content may be converted into a dynamic image data structure shown in FIG. 2.

It is to be noted that the above example is merely the illustration of the optional example for the generation of the image data provided by the present invention. Many steps for the generation of the image data provided by the present invention may have various implementation manners:

First of all, similar to the imaging method, the first characteristic may be the color, the depth, the receiving target, the scaling, the left and right frames, the hidden information, the light intensity or the viewing angle. The corresponding second characteristic may be the depth, the receiving target, the scaling, the left and right frames, the hidden information, the light intensity, the viewing angle or the color.

Next, similar to the imaging method, the frame identification information may be the frame length information, and may also be the frame end field; and this is also a similar case for the sub-frame identification information and the branched sub-frame identification information.

Moreover, according to one unrestricted example, when the image data is generated, left frame image components needing to be projected to a left eye of the user and right frame image components needing to be projected to a right eye of the user may be identified first in the image components. Herein, the "identification" should have a generalized understanding, that is, the calculation of a same element as the left frame image components and the right frame image components should also be understood as the "identification" of the left frame image components and the right frame image components. Therefore, it may be appropriate to write the left frame image components to left frame data and write the right frame image components to right frame data, so that the left frame image components is finally projected to the left eye of the user, and the right frame image components is finally projected to the right eye of the user. Meanwhile, the left-right frame information on whether each piece of frame data is the left frame data or the right frame data is written to the file characteristic data, so that whether each piece of frame data is the left frame data or the right frame data may be identified in imaging. Optionally, the left frame data and the right frame data may be the same in number and arranged alternately, and the relevant information may be agreed in advance and does not need to be written to the file characteristic data.

According to one unrestricted example, when the dynamic image data is generated, each frame of compensation information may be generated according to hardware and/or a viewer of the device. The compensation information may include one or more of a spherical aberration coefficient, a comatic aberration coefficient, an astigmatic coefficient, a distortion coefficient, a field curvature coefficient, a lateral chromatic aberration, a position aberration and a higher order aberration. The compensation information may further include a degree of short sightedness/far sightedness, a degree of astigmatism and the like of glasses of the viewer. After the compensation information is generated, the compensation information is written to the corresponding file characteristic data. The compensation information may be generated according to information of a play device, and may also be generated according to a play scenario parameter or generated according to the viewer. Furthermore, a part of compensation information may also not be integrated into the image data, and is input dynamically at each time of play, for example, as the degree of short sightedness for eyes of each viewer may be different, the image data does not record the compensation information associated with the degree of short sightedness of the viewer but relevant compensation information generated according to input information of the viewer at each time of play.

According to one unrestricted example, when the dynamic image data is generated, each frame of angle information may also be generated according to a dynamic image to be displayed. The angle information represents a mapping angle formed when the frame is projected. Each frame of angle information is written to characteristic information of corresponding frame data so as to be read when the frame is displayed. The selection on the mapping angle may be diverse. One optional manner is that all mapping angles may be adjusted freely in real time and may be any angle in a space.

According to one unrestricted example, when the dynamic image data is generated, other relevant information of the dynamic image to be displayed may further be written to the file characteristic data. The relevant information may be one or more of the image data length information, temperature information, depth information, resolution information, play speed information, single frame data format information, bit depth information, play speed information, frame characteristic data length information, creation time information, whether to compress and how to compress, and whether to encrypt and an encryption manner information, so that the information is available in play.

According to one unrestricted example, when the dynamic image data is generated, it may further be appropriate to take total light intensity of a frame/sub-frame/branched sub-frame main data in each frame/sub-frame/branched sub-frame data as light intensity information to write to image characteristic data of the frame/sub-frame/branched sub-frame data, and normalize the frame/sub-frame/branched sub-frame main data to serve as the frame/sub-frame/branched sub-frame main data, so that there is no need to calculate the total light intensity or additionally obtain the total light intensity information in display.

According to one unrestricted example, when the dynamic image data is generated, it may further be appropriate to take at least one frame/sub-frame/branched sub-frame as a subordinated frame/sub-frame/branched sub-frame, and take difference information between the frame/sub-frame/branched sub-frame and a previous frame/sub-frame/branched sub-frame of the frame/sub-frame/branched sub-frame as a content of the frame/sub-frame/branched sub-frame data. Therefore, the size of the image data may be small, and the transmission bandwidth is saved.

According to one unrestricted example, when the dynamic image data is generated, it may further be appropriate that a vector diagram of an image to be displayed is taken as the image main data to store in a first frame and multiple frames/sub-frames/branched sub-frames thereafter do not store the image main data but only change the characteristic information such as the viewing angle and the distance. The processing module generates a frame/sub-frame/branched sub-frame of the hologram according to the image main data and the characteristic information of the multiple frames/sub-frames/branched sub-frames and outputs the frame/sub-frame/branched sub-frame to display. Therefore, the size of the image data may be small, and the transmission bandwidth is saved.

In order to solve at least one part of the technical problem of the present invention, the present invention further provides an image data generation apparatus. The apparatus includes a processor, and may also include a memory. The memory may be a hard disk, a flash memory, an internal memory, etc.; and the processor may be a universal processor and may also be an FPGA, etc. The memory stores a code; and the processor executes, when running the code stored on the memory, the dynamic data generation method for the holographic image mentioned above.

Furthermore, in order to solve at least one part of the technical problem of the present invention, the present invention further provides a computer readable medium storing a code thereon. The readable medium may be an optical disc, a hard disk, a flash memory, etc. The code stored on the computer readable medium is configured to enable a processor, when running the code, the above-mentioned dynamic data generation method for the holographic image.

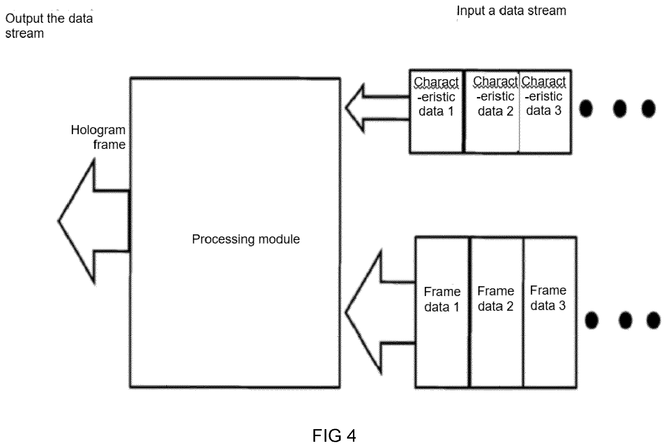

In order to solve at least one part of the technical problem of the present invention, the present invention further provides an imaging apparatus for an image. The apparatus includes a processor (such as an FPGA, or a customized and developed ASIC chip), and specially implements the above-mentioned imaging method for the holographic image via a hardware manner. The apparatus will be described below with an unrestricted example. FIG. 4 illustrates a single-color holographic display device. In the current example, the characteristic data is an depth. In the current example, the processing module is the FPGA. Characteristic information and branched sub-frame data are respectively input to the processing module by the use of different pins, and are synchronized in input time. For example, when the input sub-frame data is 1, pins for inputting distance data maintains to transmit a special voltage level (representing the distance 1). The processing module combines the distance 1 and the sub-frame data 1 according to the method described in the present invention to generate a corresponding hologram or kinoform and output the hologram or kinoform. When the processing modules finish receiving the sub-frame data 1 and then starts to receive sub-frame data 2, the level on pins for receiving the distance information is to transmit data representing the distance 2, and so on.

The display device in the above example may be head-mounted Augmented Reality (AR) glasses, the image main data comes from own software or a connected external device thereof (such as a mobile phone, a personal computer and a telecommunication sever), the characteristic data may be from an own sensor device (such as data obtained by a camera via the analysis of a SLAM method, and data of a laser distance meter, a gyroscope, an accelerometer, a light intensity sensor and other sensors) or from a connected external device thereof (the mobile phone, the personal computer and the telecommunication sever). The processing module may be built in the glasses, generates a corresponding hologram in real time according to the received data, and outputs and displays images having different imaging distances. For example, a first frame of image respectively labels two objects at 0.5 m and 3 m towards a viewer, and the frame/sub-frame of a corresponding hologram displays corresponding images at 0.5 m and 3 m, and objects corresponding to a second frame of image are two objects at 0.55 m and 4 m, and the frame/sub-frame of a corresponding second hologram displays corresponding images at 0.55 m and 4 m. It is to be noted that the processing module may also be located on an external device (such as the server, the mobile phone and the personal computer) to reduce the size of the AR glasses and lower the power consumption.

Although the present invention has been described with reference to the current specific embodiments, the invention is defined by the appended claims.

**Claims**

1. An imaging method for an image, comprising the following steps:

   step 1: receiving image data, the image data comprising image main data and image characteristic data; and
   step 10: processing the image main data based on the image characteristic data to generate and output a holographic image

      wherein the image characteristic data comprises one or more of a depth, a viewing angle, a scaling factor, a hidden-surface, left and right frames, an image color and intensity,
      **characterized in that** the image characteristic data further comprises file characteristic data, frame characteristic data and sub-frame characteristic data, and branched sub-frame characteristic data; and
      the imaging method further comprises the following steps:

         step 2: identifying the file characteristic data and the image main data comprised in the image data;
         step 3: separating the image main data into one or more pieces of frame data based on frame identification information comprised in the file characteristic data;
         step 4: reading the frame data, and identifying the frame main data and the frame characteristic data of the frame data;

step 5: separating the frame main data into one or more pieces of sub-frame data having a same first characteristic, reading each piece of sub-frame data, identifying a sub-frame main data and sub-frame characteristic data of the sub-frame data, the sub-frame characteristic data comprising the first characteristic and the first characteristic comprising one or more of a depth, a viewing angle, a scaling factor, a hidden-surface, left and right frames, an image color and intensity, and each of the pixels in the sub-frame main data having the same first characteristic, and extracting the first characteristic; and

step 6: processing the sub-frame main data based on the sub-frame characteristic data, or at least one of the sub-frame characteristic data, the file characteristic data and the frame characteristic data, and generating the holographic image and outputting the holographic image, the file characteristic data and the frame characteristic data may be empty, wherein, the step 6 further comprises the following steps:

step 6.1: reading each piece of sub-frame data, and identifying a sub-frame characteristic data and a sub-frame main data for each piece of sub-frame data;

step 6.2: separating the sub-frame main data into one or more pieces of branched sub-frame data having a same second characteristic, reading each piece of branched sub-frame data, identifying a branched sub-frame main data and branched sub-frame characteristic data of the branched sub-frame data, each pixel in the branched sub-frame data having the same second characteristic, wherein the second characteristic is different from the first characteristic, and comprises one or more of a depth, a viewing angle, a scaling factor, a hidden-surface, left and right frames, an image color and intensity; and

step 6.3: generating the holographic image based on the file characteristic data, the frame characteristic data, the sub-frame characteristic data and the branched sub-frame characteristic data and outputting the holographic image.

2. The imaging method according to claim 1, wherein the image main data is a bitmap, a vector diagram or a hologram to be displayed

3. The imaging method according to claim 1, wherein the file characteristic data comprises the frame identification information, the frame identification information comprises a frame length information representing a length of each piece of frame data, and the image data is separated into multiple pieces of frame data based on the frame length information in the step 3; and/or the frame characteristic data comprises a sub-frame identification information, the sub-frame identification information comprises sub-frame length information representing a length of each sub-frame, and each frame main data is separated into one or more pieces of sub-frame data based on the sub-frame length information in the step 5.

4. The imaging method according to claim 1, wherein the file characteristic data comprises a frame identification information, the frame identification information comprises a frame end field, an end of each piece of frame data has the frame end field, and the image data is separated into one or more pieces of frame data based on the frame end field in the step 3; and/or

The frame characteristic data comprises a sub-frame identification information, the sub-frame identification information comprises a sub-frame end field, an end of each sub-frame has the sub-frame end field, and each frame main data is separated into one or more pieces of sub-frame data based on the sub-frame end field in the step 5.

5. The imaging method according to claim 1, wherein the method for processing the image main data and/or the frame main data and/or the sub-frame main data is to generate corresponding phase distribution based on the file characteristic data and/or the frame characteristic data and/or the sub-frame characteristic data.

6. The imaging method according to claim 1 , further comprising the following steps:

Step 3.4: identifying relevant information comprised in the file characteristic data, the relevant information comprising one or more of the image data length information, the compensation information, a temperature information, a brightness information, a bit depth information, a resolution information, a play speed information, a single frame data format information, a frame characteristic data length information, a compression manner, creation time information and encryption manner information; and

step 6.4: adjusting the sub-frame or branched sub-frame data based on the relevant information.

7. The imaging method according to claim 1, wherein at least one part of the characteristic data is directly converted into the phase distribution to output to the spatial light modulator.

8. The imaging method according to claim 1, wherein the image data at least comprises a piece of subordinated frame/sub-frame/branched sub-frame data, and the subordinated frame/sub-frame/branched sub-frame data only comprises difference information between the subordinated frame/sub-frame/branched sub-frame data and a previous piece of frame/sub-frame/branched sub-frame data of the subordinated frame/sub-frame/branched sub-frame data; and
when displaying the subordinated frame/sub-frame/branched sub-frame data, taking a combination of frame/sub-frame/branched sub-frame data of the previous piece of frame/sub-frame/branched sub-frame data and frame/sub-frame/branched sub-frame data of the subordinated frame/sub-frame/branched sub-frame data as the subordinated frame/sub-frame/branched sub-frame data.

9. The imaging method according to claim 1, wherein the step 1 and/or the step 10 are completed at a server, and the server sends a result to one or more clients.

10. The imaging method according to claim 1, wherein at least one step in the steps 1-6 is completed at the server, and the server sends the result to one or more clients.

11. An image data generation method for generating image data to be used in a method according to any of claim 1-10, comprising the following steps:

    step 101: extracting a characteristic of a pixel needing to be displayed, and taking the extracted characteristic as image characteristic data, the characteristic comprising one or more of a depth, , a scaling, a viewing angle, left and right frames, surface-hidden information, a color, and light intensity;
    step 102: separating the pixels into one or more frames based on a time sequence, and taking the one or more frames as an image main data; and
    step 130: encapsulating the image main data and the image characteristic data into image data.

12. The image data generation method according to claim 11, further comprising the following step:
    step 103: writing frame identification information corresponding to a frame data format of to-be-generated frame data to the image characteristic data.

13. The image data generation method according to claim 11 or 12, wherein the image characteristic data comprises file characteristic data, frame characteristic data and sub-frame characteristic data, the sub-frame characteristic data including branched sub-frame identification information, the branched sub-frame identification information including a branched sub-frame end field, an end of the each branched sub-frame having the branched sub-frame end field, or a respective length of the branched sub-frame data, and the image main data and the file characteristic data are encapsulated into the image data in the step 102;
the image data generation method further comprises the following steps:

    step 104: taking pixels having a same first characteristic in each frame as a sub-frame main data of one sub-frame data, and writing the first characteristic to the sub-frame characteristic data, the first characteristic being one or more of the color, the depth, the receiving target, the viewing angle, the scaling, the left and right frames, a surface-hidden relationship and the light intensity; and
    step 105: taking sub-frame data in each frame as a frame main data, and encapsulating the frame main data and the frame characteristic data into frame data; and
    the file characteristic data and the frame characteristic data comprise a practical content or not comprise the practical content.

14. The image data generation method according to claim 13, wherein the image characteristic data further comprises branched sub-frame characteristic data, and the image data generation method further comprises the following steps:

    step 106: taking the pixels having a same second characteristic as a branched sub-frame main data, and writing the second characteristic to the branched sub-frame characteristic data, the second characteristic being one or more of the color, the depth, the receiving target, the viewing angle, the scaling, the left and right frames, the surface-hidden relationship and the light intensity;
    step 107: encapsulating the branched sub-frame main data and corresponding branched sub-frame characteristic data into one piece of branched sub-frame data;

step 120: taking branched sub-frames having the same first characteristic in each frame as a sub-frame main data, and encapsulating the sub-frame main data and corresponding sub-frame characteristic data into one piece of sub-frame data; and

step 121: taking sub-frame data in each frame as a frame main data, and encapsulating the frame main data and the frame characteristic data into the frame data.

15. The image data generation method according to claim 14, further comprising the following step:

step 108: writing branched sub-frame identification information corresponding to a branched sub-frame data format of to-be-generated sub-frame data to the sub-frame characteristic data, and/or writing sub-frame identification information corresponding to a sub-frame data format of to-be-generated sub-frame data to the frame characteristic data.

16. The image data generation method according to claim 13, wherein a method for converting the file characteristic data, the frame characteristic data, the sub-frame characteristic data or the branched sub-frame characteristic data into the phase distribution is to calculate the phase distribution for the current image characteristic data, frame characteristic data, sub-frame characteristic data or branched sub-frame characteristic data, or invoke the corresponding phase distribution in a preset phase distribution library based on the file characteristic data, the frame characteristic data, the sub-frame characteristic data or the branched sub-frame characteristic data.

17. The image data generation method according to claim 15, wherein the frame identification information, the sub-frame identification information or the branched sub-frame identification information is a length of the frame data, the sub-frame data or the branched sub-frame data.

18. The image data generation method according to claim 15, wherein the frame identification information, the sub-frame identification information or the branched sub-frame identification information is a frame end field on the end of the frame data, a sub-frame end field on the end of the sub-frame data or a branched sub-frame field on the end of the branched sub-frame data.

19. The image data generation method according to claim 13, further comprising the following steps: generating compensation information based on device and/or user information, the compensation information comprising one or more of a spherical aberration coefficient, a comatic aberration coefficient, an astigmatic coefficient, a distortion coefficient, a field curvature coefficient, a lateral chromatic aberration, a position aberration, a higher order aberration, a diopter coefficient and an astigmatic coefficient; and writing the compensation information to the file characteristic data.

20. The image data generation method according to claim 13, wherein relevant information of the image needing to be displayed is written to the file characteristic data, the relevant information comprising one or more of the image data length information, the compensation information, temperature information, brightness information, bit depth information, resolution information, play speed information, single frame data format information, frame characteristic data length information, whether to compress and a compression manner, creation time information and encryption manner information.

21. The image data generation method according to claim 14, further comprising the following step:

taking at least one unit as a subordinated unit, and taking a difference between the subordinated unit and a previous unit of the subordinated unit as a content of the subordinated unit, wherein
the unit is the frame data, the sub-frame data, or the branched sub-frame data.

22. An apparatus, comprising a processor, wherein the processor enables, when running, the apparatus to at least execute the method according to any one of claims 1 to 21.

**Patentansprüche**

1. Bilderzeugungsverfahren für ein Bild, das die folgenden Schritte umfasst:

Schritt 1: Empfangen von Bilddaten, wobei die Bilddaten Bildhauptdaten und Bildkenndaten umfassen, und
Schritt 10: Verarbeiten der Bildhauptdaten auf der Grundlage der Bildkenndaten, um ein holographisches Bild zu erzeugen und auszugeben,

wobei

die Bildkenndaten eines oder mehrere von einer Tiefe, einem Blickwinkel, einem Skalierungsfaktor, einer verborgenen Oberfläche, einem linken und einem rechten Frame, einer Bildfarbe und einer Intensität umfassen, **dadurch gekennzeichnet, dass** die Bildkenndaten ferner Dateikenndaten, Frame-Kenndaten und Sub-Frame-Kenndaten und verästelte Sub-Frame-Kenndaten umfassen, und
das Bilderzeugungsverfahren ferner die folgenden Schritte umfasst:

Schritt 2: Identifizieren der in den Bilddaten enthaltenen Dateikenndaten und Bildhauptdaten;
Schritt 3: Trennen der Bildhauptdaten in ein oder mehrere Frame-Daten-Elemente basierend auf Frame-Identifizierungsinformationen, welche in den Dateikenndaten beinhaltet sind,
Schritt 4: Auslesen der Frame-Daten und Identifizieren der Frame-Hauptdaten und der Frame-Kenndaten der Frame-Daten;
Schritt 5: Trennen der Frame-Hauptdaten in ein oder mehrere Sub-Frame-Daten-Elemente mit einer gleichen ersten Kenngröße, Auslesen von jedem Sub-Frame-Daten-Element, Identifizieren von Sub-Frame-Hauptdaten und Sub-Frame-Kenndaten des jeweiligen Sub-Frame-Daten-Elements, wobei die Sub-Frame-Kenndaten die erste Kenngröße umfassen und die erste Kenngröße eines oder mehrere von einer Tiefe, einem Blickwinkel, einem Skalierungsfaktor, einer verborgenen Oberfläche, einem linken und einem rechten Frame, einer Bildfarbe und einer Intensität umfasst, und jedes der Pixel in den Sub-Frame-Hauptdaten die gleiche erste Kenngröße aufweist, und Extrahieren der ersten Kenngröße; und
Schritt 6: Verarbeiten der Sub-Frame-Hauptdaten auf Basis der Sub-Frame-Kenndaten

oder der Sub-Frame-Kenndaten und/oder der Datei-Kenndaten und/oder der Frame-Kenndaten, und Erzeugen des holographischen Bildes und Ausgeben des holographischen Bildes, wobei die Datei-Kenndaten und die Frame-Kenndaten leer sein dürfen,
wobei
die Schritt 6 weiterhin die folgenden Schritte umfasst:

Schritt 6.1: Auslesen eines jeden Sub-Frame-Daten-Elements und Identifizieren von Sub-Frame-Kenndaten und von Sub-Frame-Hauptdaten für jedes Sub-Frame-Daten-Elemente;
Schritt 6.2: Trennen der Sub-Frame-Hauptdaten in ein oder mehrere verästelten Sub-Frame-Daten-Elemente mit einer gleichen zweiten Kenngröße, Auslesen eines jeden verästelten Sub-Frame-Daten-Elements, Identifizieren von verästelten Sub-Frame-Hauptdaten und verästelten Sub-Frame-Kenndaten der verästelten Sub-Frame-Daten, wobei jedes Pixel in den verästelten Sub-Frame-Daten die gleiche zweite Kenngröße aufweist, wobei die zweite Kenngröße sich von der ersten Kenngröße unterscheidet und eines oder mehr von einer Tiefe, einem Blickwinkel, einem Skalierungsfaktor, einer verborgenen Oberfläche, einem linken und einem rechten Frame, einer Bildfarbe und einer Intensität umfasst, und
Schritt 6.3: Erzeugen des holographischen Bildes auf der Grundlage der Datei-Kenndaten, der Frame-Kenndaten, der Sub-Frame-Kenndaten und der verästelten Sub-Frame-Kenndaten und Ausgeben des holographischen Bildes.

2. Bilderzeugungsverfahren nach Anspruch 1, wobei die Bildhauptdaten eine Bitmap, ein Vektordiagramm oder ein anzuzeigendes Hologramm sind.

3. Bilderzeugungsverfahren nach Anspruch 1, wobei die Dateikenndaten die Frame-Identifizierungsinformationen umfassen, die Frame-Identifizierungsinformationen eine Frame-Längeninformation umfassen, die eine Länge eines jeden Frame-Daten-Elements repräsentiert, und die Bilddaten in Schritt 3 auf Basis der Frame-Längeninformation in mehrere Frame-Daten-Elemente getrennt werden; und/oder die Frame-Kenndaten eine Sub-Frame-Identifizierungsinformation umfassen, die Sub-Frame-Identifizierungsinformation eine Sub-Frame-Längeninformation umfasst, die eine Länge eines jeden Sub-Frames darstellt, und die jeweiligen Sub-Frame-Hauptdaten in Schritt 5 auf Basis der Sub-Frame-Längeninformation in ein oder mehrere Sub-Frame-Daten-Elemente getrennt werden.

4. Bilderzeugungsverfahren nach Anspruch 1, wobei die Dateikenndaten eine Frame-Identifizierungsinformation umfassen, die Frame-Identifizierungsinformation ein Frame-Endfeld umfasst, ein Ende eines jeden Frame-Daten-Elements das Frame-Endfeld aufweist, und die Bilddaten in Schritt 3 auf Basis des Frame-Endfeldes in ein oder mehrere Frame-Daten-Elemente getrennt werden; und/oder
die Frame-Kenndaten eine Sub-Frame-Identifizierungsinformation umfassen, die Sub-Frame-Identifizierungssinformation ein Sub-Frame-Endfeld aufweist, ein Ende eines jeden Sub-Frames ein Sub-Frame-Endfeld aufweist, und alle Sub-Frame-Hauptdaten in Schritt 5 auf Grundlage des Sub-Frame-Endfelds in ein oder mehrere Sub-Frame-Daten-Elemente getrennt wird.

5. Bilderzeugungsverfahren nach Anspruch 1, wobei das Verfahren zum Verarbeiten der Bildhauptdaten und/oder der Frame-Hauptdaten und/oder der Sub-Frame-Hauptdaten darin besteht, eine entsprechende Phasenverteilung auf Basis der Dateikenndaten und/oder der Frame-Kenndaten und/oder der Sub-Frame-Kenndaten zu erzeugen.

6. Bilderzeugungsverfahren nach Anspruch 1, das ferner die folgenden Schritte umfasst:

   Schritt 3.4: Identifizieren relevanter Informationen, die in den Dateikenndaten umfasst sind, wobei die relevanten Informationen eine oder mehrere der folgenden Informationen umfassen: eine Bilddatenlängeninformation, eine Kompensationsinformation, eine Temperaturinformation, eine Helligkeitsinformation, eine Bit-Tiefeninformation, eine Auflösungsinformation, eine Wiedergabegeschwindigkeitsinformation, eine Einzel-Frame-Datenformatinformation, eine Frame-Kenndatenlängen-Information, eine Komprimierungsart, eine Erstellungszeitinformation und eine Verschlüsselungsartinformation; und
   Schritt 6.4: Anpassen der Sub-Frame-Daten oder der verästelten Sub-Frame-Daten auf Basis der relevanten Informationen.

7. Bilderzeugungsverfahren nach Anspruch 1, wobei mindestens ein Teil der Kenndaten direkt in die an den Raumlichtmodulator auszugebende Phasenverteilung umgewandelt wird.

8. Bilderzeugungsverfahren nach Anspruch 1, wobei die Bilddaten mindestens ein Element von untergeordneten Frame/Sub-Frame/verästelter Sub-Frame-Daten umfassen, und die untergeordneten Frame/Sub-Frame/verästelten Sub-Frame-Daten nur Differenzinformationen zwischen den untergeordneten Frame/Sub-Frame/verästelten Sub-Frame-Daten und einem vorherigen Element von Frame/Sub-Frame/verästelten Sub-Frame-Daten der untergeordneten Frame/Sub-Frame/verästelten Sub-Frame-Daten umfassen, und
   wenn die untergeordneten Frame/Sub-Frame/verästelten Sub-Frame-Daten angezeigt werden, eine Kombination von Frame/Sub-Frame/verästelten Sub-Frame-Daten des vorherigen Elements von Frame/Sub-Frame/verästelten Sub-Frame-Daten und Frame/Sub-Frame/verästelte Sub-Frame-Daten der untergeordneten Frame/Sub-Frame/verästelten Sub-Frame-Daten als die Frame/Sub-Frame/verästelten Sub-Frame-Daten genommen werden.

9. Bilderzeugungsverfahren nach Anspruch 1, wobei Schritt 1 und/oder Schritt 10 auf einem Server abgeschlossen werden und der Server ein Ergebnis an einen oder mehrere Clients sendet.

10. Bilderzeugungsverfahren nach Anspruch 1, wobei mindestens ein Schritt unter den Schritten 1-6 auf dem Server abgeschlossen wird und der Server das Ergebnis an einen oder mehrere Clients sendet.

11. Bilddaten-Erzeugungsverfahren zum Erzeugen von Bilddaten zur Verwendung in einem Verfahren nach einem der Ansprüche 1-10, umfassend die folgenden Schritte:

   Schritt 101: Extrahieren einer Kenngröße eines anzuzeigenden Pixels und Verwenden der extrahierten Kenngröße als Bildkenndaten, wobei die Kenngröße eines oder mehrere von einer Tiefe, einer Skalierung, einem Blickwinkel, einem linken und einem rechten Frame, einer Oberfläche-verborgen-Information, einer Farbe und einer Lichtintensität umfasst,
   Schritt 102: Trennen der Pixel in einen oder mehrere Frames basierend auf einer zeitlichen Abfolge, und Verwenden des einen oder der mehreren Frames als Bildhauptdaten; und
   Schritt 130: Einkapseln der Bildhauptdaten und der Bildkenndaten in Bilddaten.

12. Bilddaten-Erzeugungsverfahren nach Anspruch 11, das ferner den folgenden Schritt umfasst:
   Schritt 103: Schreiben von Frame-Identifizierungsinformationen, die einem Frame-Datenformat von zu erzeugenden Frame-Daten entsprechen, in die Bildkenndaten.

13. Bilddaten-Erzeugungsverfahren nach Anspruch 11 oder 12, wobei die Bildkenndaten Dateikenndaten, Frame-Kenndaten und Sub-Frame-Kenndaten umfassen, wobei die Sub-Frame-Kenndaten verästelte Sub-Frame-Identifizierungsinformationen beinhalten, wobei die verästelten Sub-Frame-Identifizierungsinformationen ein verästeltes Sub-Frame-Endfeld, ein Ende eines jeden verästelten Sub-Frames mit dem verästelten Sub-Frame-Endfeld oder eine entsprechende Länge der verästelten Sub-Frame-Daten beinhalten, und die Bildhauptdaten und die Dateikenndaten in Schritt 102 in die Bilddaten eingekapselt werden;

wobei das Bilddaten-Erzeugungsverfahren ferner die folgenden Schritte umfasst:

Schritt 104: Nehmen von Pixeln, die eine gleiche erste Kenngröße in jedem Frame aufweisen, als Sub-Frame-Hauptdaten von einem Sub-Frame-Daten-Element, und Schreiben der ersten Kenngröße in die Sub-Frame-Kenndaten, wobei die erste Kenngröße eines oder mehrere von der Farbe, der Tiefe, des Empfangsziels, des Blickwinkels, der Skalierung, des linken und des rechten Frames, einer Oberfläche-verborgen-Beziehung und der Lichtintensität ist; und

Schritt 105: Nehmen von Sub-Frame-Daten in jedem Frame als Frame-Hauptdaten und Einkapseln der Frame-Hauptdaten und der Frame-Kenndaten in Frame-Daten; und

die Dateikenndaten und die Sub-Frame-Kenndaten einen praxisbezogenen Content umfassen oder den praxisbezogenen Content nicht umfassen.

14. Bilddaten-Erzeugungsverfahren nach Anspruch 13, wobei die Bildkenndaten ferner verästelte Sub-Frame-Kenndaten umfassen und das Bilddaten-Erzeugungsverfahren ferner die folgenden Schritte umfasst:

Schritt 106: Nehmen der Pixel, die eine gleiche zweite Kenngröße aufweisen, als verästelte Sub-Frame-Hauptdaten, und Schreiben der zweiten Kenngröße in die verästelten Sub-Frame-Kenndaten, wobei die zweite Kenngröße eines oder mehrere von einer Farbe, einer Tiefe, einem Empfangsziel, einem Blickwinkel, einer Skalierung, einem linken und einem rechten Frame, einer Oberflächen-verborgen-Beziehung und der Lichtintensität ist;

Schritt 107: Einkapseln der verästelten Sub-Frame-Hauptdaten und entsprechender verästelter Sub-Frame-Kenndaten in ein Element der verästelten Sub-Frame-Daten;

Schritt 120: Nehmen von verästelten Sub-Frames mit der gleichen ersten Kenngröße in jedem Frame als Sub-Frame-Hauptdaten und Einkapseln der Sub-Frame-Hauptdaten und der zugehörigen Sub-Frame-Kenndaten in ein Element der Sub-Frame-Daten; und

Schritt 121: Nehmen von Sub-Frame-Daten in jedem Frame als Frame-Hauptdaten und Einkapseln der Frame-Hauptdaten und der Frame-Kenndaten in die Frame-Daten.

15. Bilddaten-Erzeugungsverfahren nach Anspruch 14, das ferner die folgende Schritte umfasst:

Schritt 108: Schreiben von verästelten Sub-Frame-Identifizierungsinformationen entsprechend einem verästelten Sub-Frame-Datenformat von zu erzeugenden Sub-Frame-Daten in die Sub-Frame-Kenndaten, und/oder Schreiben von Sub-Frame-Identifizierungsinformationen entsprechend einem Sub-Frame-Datenformat von zu erzeugenden Sub-Frame-Daten in die Frame-Kenndaten.

16. Bilddaten-Erzeugungsverfahren nach Anspruch 13, wobei ein Verfahren zum Umwandeln der Dateikenndaten, der Frame-Kenndaten, der Sub-Frame-Kenndaten oder der verästelten Sub-Frame-Kenndaten in die Phasenverteilung darin besteht, die Phasenverteilung für die aktuellen Bildkenndaten, Frame-Kenndaten, Sub-Frame-Kenndaten oder verästelten Sub-Frame-Kenndaten zu berechnen, oder die entsprechende Phasenverteilung auf Basis der Dateikenndaten, der Frame-Kenndaten, der Sub-Frame-Kenndaten oder der verästelten Sub-Frame-Kenndaten in einer vorbestimmten Phasenverteilungs-Bibliothek aufzurufen.

17. Bilddaten-Erzeugungsverfahren nach Anspruch 15, wobei die Frame-Identifizierungsinformationen, die Sub-Frame-Identifizierungsinformationen oder die verästelten Sub-Frame-Identifizierungssinformationen eine Länge der Bilddaten, der Sub-Frame-Daten oder der verästelten Sub-Frame-Daten sind.

18. Bilddaten-Erzeugungsverfahren nach Anspruch 15, wobei die Frame-Identifizierungsinformtionen, die Sub-Frame-Identifizierungsinformationen oder die verästelten Sub-Frame-Identifizierungsinformationen ein Frame-Endfeld am Ende der Frame-Daten, ein Sub-Frame-Endfeld am Ende der Sub-Frame-Daten oder ein verästeltes Sub-Frame-Feld am Ende der verästelten Sub-Frame-Daten sind.

19. Bilddaten-Erzeugungsverfahren nach Anspruch 13, das ferner die folgenden Stufen umfasst: Erzeugen von Kompensationsinformationen auf Basis von Vorrichtungs- und/oder Benutzerinformationen, wobei die Kompensationsinformationen eines oder mehrere von einem sphärischen Aberrationskoeffizienten, einem Koeffizienten der komatischen Aberration, einem astigmatischen Koeffizienten, einem Verzerrungskoeffizienten, einem Feldkrümmungskoeffizienten, einer seitlichen chromatischen Aberration, einer Positionsaberration, einer Abberation höherer Ordnung, einem Dioptrienkoeffizienten und einem astigmatischen Koeffizienten umfassen, und Schreiben der Kompensationsinformationen in die Datei-Kenndaten.

**20.** Bilddaten-Erzeugungsverfahren nach Anspruch 13, bei dem relevante Informationen über das anzuzeigenden Bild in die Datei-Kenndaten geschrieben werden, wobei die relevanten Informationen eines oder mehrere der folgenden Elemente umfassen: die Bilddatenlängeninformationen, die Kompensationsinformationen, Temperaturinformationen, Helligkeitsinformationen, Bit-Tiefeninformationen, Auflösungsinformationen, Wiedergabegeschwindigkeitsinformationen, Einzel-Frame-Datenformatinformationen, Informationen über die Frame-Kenndatenlänge, ob komprimiert werden soll und eine Komprimierungsart, Erstellungszeitinformationen und Verschlüsselungsartinformationen.

**21.** Bilddaten-Erzeugungsverfahren nach Anspruch 14, das ferner die folgende Schritte umfasst:

Nehmen mindestens einer Einheit als untergeordnete Einheit und Nehmen einer Differenz zwischen der untergeordneten Einheit und einer vorherigen Einheit der untergeordneten Einheit als Content der untergeordneten Einheit, wobei

die Einheit die Frame-Daten, die Sub-Frame-Daten oder die verästelten Sub-Frame-Daten sind.

**22.** Vorrichtung, umfassend einen Prozessor, wobei der Prozessor es der Vorrichtung ermöglicht, wenn sie betrieben wird, zumindest das Verfahren nach einem der Ansprüche 1 bis 21 auszuführen.

## Revendications

**1.** Procédé d'imagerie pour une image, comprenant les étapes suivantes :

étape 1 : réception de données d'image, les données d'image comprenant des données principales d'image et des données caractéristiques d'image ; et
étape 10 : traitement des données principales d'image en fonction des données caractéristiques d'image, afin de générer et délivrer une image holographique ;

dans lequel

les données caractéristiques d'image comprennent une ou plusieurs parmi une profondeur, un angle de vue, une mise à l'échelle, une surface-cachée, des trames gauche et droite, une couleur d'image et une intensité, **caractérisé en ce que** les données caractéristiques d'image comprennent en outre des données caractéristiques de fichier, des données caractéristiques de trame
et des données caractéristiques de sous-trame, et des données caractéristiques de sous-trame ramifiée;et le procédé d'imagerie comprend en outre les étapes suivantes :

étape 2 : identification des données caractéristiques de fichier et des données principales d'image comprises dans les données d'image ;
étape 3 : séparation des données principales d'image en un ou plusieurs éléments de données de trame en fonction d'informations d'identification de trame comprises dans les données caractéristiques de fichier ;
étape 4 : lecture des données de trame, et identification des données principales de trame et des données caractéristiques de trame des données de trame ;
étape 5 : séparation des données principales de trame en un ou plusieurs éléments de données de sous-trame présentant une même première caractéristique, lecture de chaque élément de données de sous-trame, identification d'une donnée principale de sous-trame et d'une donnée caractéristique de sous-trame des données de sous-trame, la donnée caractéristique de sous-trame comprenant la première caractéristique et la première caractéristique comprenant une ou plusieurs parmi une profondeur, un angle de vue, une mise à l'échelle, une surface-cachée, des trames gauche et droite, une couleur d'image et une intensité, et chacun des pixels dans les données principales de sous-trame présentant la même première caractéristique, et extraction de la première caractéristique ; et
étape 6 : traitement des données principales de sous-trame en fonction des données caractéristiques de sous-trame, ou au moins l'une des données caractéristiques de sous-trame, des données caractéristiques de fichier et des données caractéristiques de trame, et génération de l'image holographique et sortie de l'image holographique, les données caractéristiques de fichier et les données caractéristiques de trame peuvent être vides,
dans lequel

l'étape 6 comprend en outre les étapes suivantes :

étape 6.1 : lecture de chaque élément de données de sous-trame, et identification d'une donnée caractéristique de sous-trame et d'une donnée principale de sous-trame pour chaque élément de données de sous-trame ;

étape 6.2 : séparation des données principales de sous-trame en un ou plusieurs éléments de données de sous-trame ramifiées présentant la même deuxième caractéristique, lecture de chaque donnée de sous-trame ramifiée, identification d'une donnée principale de sous-trame ramifiée et d'une donnée caractéristique de sous-trame ramifiée des données de sous-trame ramifiée, chaque pixel dans les données de sous-trame ramifiée présentant la même deuxième caractéristique, la deuxième caractéristique étant différente de la première caractéristique, et comprenant un ou plusieurs parmi une profondeur, un angle de vue, une mise à l'échelle, une surface-cachée, des trames gauche et droite, une couleur d'image et une intensité ; et

étape 6.3 : génération de l'image holographique en fonction des données caractéristiques de fichier, des données caractéristiques de trame, des données caractéristiques de sous-trame et des données caractéristiques de sous-trame ramifiée et sortie de l'image holographique.

**2.** Procédé d'imagerie selon la revendication 1, dans lequel les données principales d'image sont un bitmap, un diagramme vectoriel ou un hologramme à afficher

**3.** Procédé d'imagerie selon la revendication 1, dans lequel les données caractéristiques de fichier comprennent les informations d'identification de trame, les informations d'identification de trame comprennent des informations de longueur de trame représentant une longueur de chaque élément de données de trame, et les données d'image sont séparées en plusieurs éléments de données de trame sur la base des informations de longueur de trame à l'étape 3 ; et/ou les données caractéristiques de trame comprennent des informations d'identification de sous-trame, les informations d'identification de sous-trame comprennent des informations de longueur de sous-trame représentant une longueur de chaque sous-trame, et chaque donnée principale de trame est séparée en un ou plusieurs éléments de données de sous-trame sur la base des informations de longueur de sous-trame à l'étape 5.

**4.** Procédé d'imagerie selon la revendication 1, dans lequel les données caractéristiques de fichier comprennent des informations d'identification de trame, les informations d'identification de trame comprennent un champ de fin de trame, une fin de chaque élément de données de trame présente le champ de fin de trame, et la donnée d'image est séparée en une ou plusieurs données de trame en fonction du champ de fin de trame à l'étape 3 ; et/ou les données caractéristiques de trame comprennent des informations d'identification de sous-trame, les informations d'identification de sous-trame comprennent un champ de fin de sous-trame, une fin de chaque sous-trame présente le champ de fin de sous-trame, et chaque donnée principale de trame est séparée en un ou plusieurs éléments de données de sous-trame sur la base du champ de fin de sous-trame à l'étape 5.

**5.** Procédé d'imagerie selon la revendication 1, dans lequel le procédé de traitement des données principales d'image et/ou des données principales de trame et/ou des données principales de sous-trame consiste à générer une distribution de phase correspondante sur la base des données caractéristiques de fichier et/ou des données caractéristiques de trame et/ou des données caractéristiques de sous-trame.

**6.** Procédé d'imagerie selon la revendication 1, comprenant en outre les étapes suivantes :

étape 3.4 : identification d'informations pertinentes comprises dans les données caractéristiques de fichier, les informations pertinentes comprenant une ou plusieurs parmi les informations de longueur de données d'image, les informations de compensation, des informations de température, des informations de luminosité, des informations de profondeur de bits, des informations de résolution, des informations de vitesse de lecture, des informations de format de données d'une seule trame, des informations de longueur de données caractéristiques de trame, un mode de compression, des informations de temps de création et des informations de mode de cryptage ; et

étape 6.4 : ajustement des données de sous-trame ou de sous-trame ramifiée sur la base des informations pertinentes.

**7.** Procédé d'imagerie selon la revendication 1, dans lequel au moins une partie des données caractéristiques est directement convertie en la distribution de phase à à sortir sur le modulateur spatial de lumière.

**8.** Procédé d'imagerie selon la revendication 1, dans lequel les données d'image comprennent au moins un élément de données de trame/sous-trame/sous-trame ramifiée subordonnées, et les données de trame/sous-trame/sous-trame ramifiée subordonnée comprennent seulement des informations de différence entre les données de trame/sous-trame/sous-trame ramifiée subordonnées et un élément précédent d données de trame/sous-trame/sous-trame ramifiée des données de trame/sous-trame/sous-trame ramifiée subordonnées ; et
lors de l'affichage des données de trame/sous-trame/sous-trame ramifiée subordonnées, la prise d'une combinaison de données de trame/sous-trame/sous-trame ramifiée de l'élément précédent de données de trame/sous-trame/sous-trame ramifiée et des données de trame/sous-trame/sous-trame ramifiée des données de trame/sous-trame/sous-trame ramifiée subordonnées en tant que données de trame/sous-trame/sous-trame ramifiée subordonnées.

**9.** Procédé d'imagerie selon la revendication 1, dans lequel l'étape 1 et/ou l'étape 10 sont achevées au niveau d'un serveur, et le serveur envoie un résultat à un ou plusieurs clients.

**10.** Procédé d'imagerie selon la revendication 1, dans lequel au moins une étape des étapes 1-6 est achevée au niveau du serveur, et le serveur envoie le résultat à un ou plusieurs clients.

**11.** Procédé de génération de données d'image pour la génération de données d'image à utiliser dans un procédé selon l'une quelconque des revendications 1 à 10, comprenant les étapes suivantes :

étape 101 : extraction d'une caractéristique d'un pixel devant être affiché, et prise de la caractéristique extraite en tant que données caractéristiques d'image, la caractéristique comprenant un ou plusieurs parmi une profondeur, une mise à l'échelle, un angle de vue, des trames gauche et droite, des informations cachées en surface, une couleur, et une intensité lumineuse ;
étape 102 : séparation des pixels en une ou plusieurs trames sur la base d'une séquence temporelle, et prise de l'une ou plusieurs trames en tant que données principales d'image ; et
étape 130 : encapsulation des données principales d'image et des données caractéristiques d'image dans des données d'image.

**12.** Procédé de génération de données d'image selon la revendication 11, comprenant en outre l'étape suivante :
étape 103 : écriture d'informations d'identification de trame correspondant à un format de données de trame de données de trame à générer dans les données caractéristiques d'image.

**13.** Procédé de génération de données d'image selon la revendication 11 ou 12, dans lequel les données caractéristiques d'image comprennent des données caractéristiques de fichier, des données caractéristiques de trame et des données caractéristiques de sous-trame, les données caractéristiques de sous-trame comportant des informations d'identification de sous-trame ramifiée, les informations d'identification de sous-trame ramifiée comportant un champ de fin de sous-trame ramifiée, une fin de chaque sous-trame ramifiée présentant un champ de fin de sous-trame ramifiée, ou une longueur respective des données de sous-trame ramifiée, et les données principales d'image et les données caractéristiques de fichier sont encapsulées dans les données d'image à l'étape 102 ;
le procédé de génération de données d'image comprend en outre les étapes suivantes :

étape 104 : prise de pixels présentant la même première caractéristique dans chaque trame en tant que données principales de sous-trame d'une donnée de sous-trame, et écriture de la première caractéristique dans les données caractéristiques de sous-trame, la première caractéristique étant un ou plusieurs parmi la couleur, la profondeur, la cible réceptrice, l'angle de vue, la mise à l'échelle, les trames gauche et droite, une relation cachée en surface et l'intensité lumineuse ; et
étape 105 : prise de données de sous-trame dans chaque trame en tant que données principales de trame, et encapsulation des données principales de trame et des données caractéristiques de trame dans des données de trame ; et
les données caractéristiques de fichier et les données caractéristiques de trame comprennent ou non le contenu pratique.

**14.** Procédé de génération de données d'image selon la revendication 13, dans lequel les données caractéristiques d'image comprennent en outre des données caractéristiques de sous-trame ramifiée, et le procédé de génération de données d'image comprend en outre les étapes suivantes :

étape 106 : prise des pixels présentant la même deuxième caractéristique en tant que données principales de sous-trame ramifiée, et écriture de la deuxième caractéristique dans les données caractéristiques de sous-trame ramifiée, la deuxième caractéristique étant une ou plusieurs parmi la couleur, la profondeur, la cible réceptrice, l'angle de vue, la mise à l'échelle, les trames gauche et droite, la relation cachée en surface et l'intensité lumineuse ;

étape 107 : encapsulation des données principales de sous-trame ramifiée et les données caractéristiques de sous-trame ramifiée correspondantes dans une donnée de sous-trame ramifiée ;

étape 120 : prise de sous-trames ramifiées présentant la même première caractéristique dans chaque trame en tant que données principales de sous-trame, et encapsulation des données principales de sous-trame et des données caractéristiques de sous-trame correspondantes dans un élément de données de sous-trame ;

et étape 121 : prise de données de sous-trame dans chaque trame en tant que données principales de trame, et encapsulation des données principales de trame et des données caractéristiques de trame dans les données de trame.

15. Procédé de génération de données d'image selon la revendication 14, comprenant en outre l'étape suivante :

étape 108 : écriture d'informations d'identification de sous-trame ramifiée correspondant à un format de données de sous-trame ramifiée de données de sous-trame à générer dans les données caractéristiques de sous-trame, et/ou écriture d'informations d'identification de sous-trame correspondant à un format de données de sous-trame de données de sous-trame à générer dans les données caractéristiques de trame.

16. Procédé de génération de données d'image selon la revendication 13, dans lequel un procédé pour convertir les données caractéristiques de fichier, les données caractéristiques de trame, les données caractéristiques de sous-trame ou les données caractéristiques de sous-trame ramifiée en la distribution de phase consiste à calculer la distribution de phase pour les données caractéristiques d'image, les données caractéristiques de trame, les données caractéristiques de sous-trame ou les données caractéristiques de sous-trame ramifiées actuelles, ou à invoquer la distribution de phase correspondante dans une bibliothèque de distribution de phase prédéfinie sur la base des données caractéristiques de fichier, des données caractéristiques de trame, des données caractéristiques de sous-trame ou des données caractéristiques de sous-trame ramifiée.

17. Procédé de génération de données d'image selon la revendication 15, dans lequel l'information d'identification de trame, l'information d'identification de sous-trame ou l'information d'identification de sous-trame ramifiée est une longueur des données de trame, des données de sous-trame ou des données de sous-trame ramifiée.

18. Procédé de génération de données d'image selon la revendication 15, dans lequel les informations d'identification de trame, les informations d'identification de sous-trame ou les informations d'identification de sous-trame ramifiée sont un champ de fin de trame à la fin des données de trame, un champ de fin de sous-trame à la fin des données de sous-trame ou un champ de sous-trame ramifiée à la fin des données de sous-trame ramifiée.

19. Procédé de génération de données d'image selon la revendication 13, comprenant en outre les étapes suivantes : génération d'informations de compensation sur la base d'informations de dispositif et/ou d'utilisateur, les informations de compensation comprenant un ou plusieurs parmi un coefficient d'aberration sphérique, un coefficient d'aberration chromatique, un coefficient d'astigmatisme, un coefficient de distorsion, un coefficient de courbure de champ, une aberration chromatique latérale, une aberration de position, une aberration d'ordre supérieur, un coefficient dioptrique et un coefficient d'astigmatisme ; et écriture des informations de compensation dans les données caractéristiques de fichier.

20. Procédé de génération de données d'image selon la revendication 13, dans lequel des informations pertinentes de l'image à afficher sont écrites dans les données caractéristiques de fichier, les informations pertinentes comprenant une ou plusieurs parmi des informations de longueur de données d'image, les informations de compensation, des informations de température, des informations de luminosité, des informations de profondeur de bits, des informations de résolution, des informations de vitesse de lecture, des informations de format de données d'une seule trame, des informations de longueur de données caractéristiques de trame, la nécessité de compression et un mode de compression, des informations de temps de création et des informations de mode de cryptage.

21. Procédé de génération de données d'image selon la revendication 14, comprenant en outre l'étape suivante :

prise d'au moins une unité en tant qu'unité subordonnée, et prise d'une différence entre l'unité subordonnée et une unité précédente de l'unité subordonnée en tant que contenu de l'unité subordonnée, dans lequel l'unité consiste des données de trame, des données de sous-trame ou des données de sous-trame ramifiée.

**22.** Appareil, comprenant un processeur, dans lequel le processeur permet, lors de son fonctionnement, à l'appareil d'exécuter au moins le procédé selon l'une quelconque des revendications 1 à 21.

FIG 1

Image file

| File characteristic data | Image main data | |
|---|---|---|
| | **Frame image characteristic data (first frame)** | **Frame image characteristic data (second frame)** |
| | Frame main data (first frame) | Frame main data (second frame) |

Frame main data (first frame):
- Sub-frame image characteristic data (first sub-frame)
- Sub-frame main data (First sub-frame)
  - First branched sub-frame data
  - Second branched sub-frame data
- Second sub-frame data

FIG 2

FIG 3

Output the data
stream

Input a data stream

Hologram
frame

| Charact<br>-eristic<br>data 1 | Charact<br>-eristic<br>data 2 | Charact<br>-eristic<br>data 3 |
|---|---|---|

● ● ●

Processing module

| Frame<br>data 1 | Frame<br>data 2 | Frame<br>data 3 |
|---|---|---|

● ● ●

FIG 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016187850 A1, OH KWAN JUNG
- US 2015146269 A1, LEE BEOM RYEOL
- EP 2634648 A1